Europäisches Patentamt

European Patent Office

Office européen des brevets

(11) Publication number: **0 161 891**
A2

## EUROPEAN PATENT APPLICATION

(21) Application number: **85303198.7**

(22) Date of filing: **03.05.85**

(51) Int. Cl.⁴: **G 05 D 23/20**

(30) Priority: **03.05.84 GB 8411363**

(71) Applicant: **Honeywell Control Systems Ltd., Honeywell House Charles Square, Bracknell Berkshire (GB)**

(72) Inventor: **Hughes, David Gareth, Maidengill Douglas, Lanarkshire Scotland (GB)**
Inventor: **McGinley, Charles Edward, 4C Lennox Court 22 Stockiemuir Avenue, Glasgow G61 3JN Scotland (GB)**

(43) Date of publication of application: **21.11.85 Bulletin 85/47**

(74) Representative: **Harman, Michael Godfrey, Honeywell Control Systems Ltd. Charles Square, Bracknell Berkshire RG12 1EB (GB)**

(84) Designated Contracting States: **BE FR GB SE**

(54) **Temperature control system.**

(57) The difference temperature TD between an actual temperature TA and a setpoint temperature TSP passes through PID (proportional, integral, and differential) circuitry 17 to give a target temperature TT. An error temperature TE is the difference between TT and a delivered water temperature TDW, and drives a flip-flop FF1 via a hysteresis circuit 21. FF1 produces a control signal for turning on a heat source HS, from which hot water is pumped to a radiator R. The heat source HS may be a heat pump, which draws a transient high inrush current when turned on. To minimize the inrush currents, a timer TMR1 is triggered by the control signal and prevents (by logic 22-24) the generation of a further control signal until the timer period has expired. The system may be implemented by a microprocessor.

## TEMPERATURE CONTROL SYSTEM

The present invention relates primarily to temperature control in central heating systems, though it is concerned with the control system rather than the central heating system as such and may therefore be applicable to other process variable control systems.

It is well known, in a central heating system, to control the water temperature in a feedback loop by switching the heat source (e.g. a boiler) on and off, and modulating the ratio of ON and OFF times to achieve the desired mean heat input. In such systems, some means of achieving cycling is required.

One method of achieving cycling is to use a room thermostat with a simple two point control with a differential between the two switching temperatures, that at which the thermostat output changes from ON (calling for heat) to OFF and that (slightly lower) at which the output changes back from OFF to ON. A problem with this method is that the cycle rate is dependent on the particular conditions of the room being heated - a large radiator will give rapid heating, whereas a large well-insulated room with a small radiator will heat up slowly. Control of cycle time can be achieved to a limited extent by adjustment of the differential of the thermostat on site.

Another method of achieving cycling is to use a room thermostat type device with an anticipator, which is a small heating resistor build into the thermostat and which is turned on with the heat source. This system offers proportional control. However, this sytem has limited applicability, and suffers from the control point error common to all proportional controllers, in that the mean on time is controlled by the error between the actual and desired temperatures so that a finite error must exist for the mean on time to be different from the zero error value.

It is desirable in some circumstances to have better control over the cycle rate. In particular, in systems using electrically driven heat pumps, the turning on of the compression motor results in a transient high inrush current, and it is desirable to be able to set a predetermined maximum value for the cycle rate, so controlling the effects of such inrush currents.

The present invention provides a control system which is able to utilize full PID (proportional integral and differential) control. In such control, a target temperature TT for delivered water is defined in terms of the set point error temperature TD as follows:

$$TT = k1.TD + k2\int TD.dt + k3.d(TD)/dt.$$

The error temperature TD is the difference between the setpoint or desired temperature TSP and the actual temperature TA:

$$TD = TSP - TA$$

The three k values are constants, which define the proportional, integral, and differential responses of the system. Of the three terms, only the integral term is essential for the operation of the system; the other two terms are included to improve the system response to changes in the system conditions. The error temperature TD may in fact be an error (difference between setpoint and actual values) of room temperature, water temperature, or any other suitable parameter in the loop. A second error temperature TE is generated as the difference between the target temperature TT and the delivered water temperature TDW, and this is used to control the turning on and off of the heat source. A differential is used, so that the heat source is turned off if this error signal goes beyond one value and is turned on if it goes the opposite way beyond a second value.

According to the invention, a timer means is started when the heat source is turned on, and the heat source is not allowed to turn on again until the timer period has expired. If the heat source is still on when the timer period expires and does not go off until after then, or if it has turned off but the error temperature has not crossed its differential band by the time the timer period expires, then the heat source will be turned on again when the error signal passes outside the differential band in the usual way and the operation will not be affected by the timer. However, if the heat source has been turned off and the error temperature has crossed the differential band before the timer period expires, the heat source will be prevented from turning on at the normal time. Thus the system sets a lower limit to the cycle time, i.e. an upper limit to the cycle rate.

A temperature control system embodying the invention will be described, by way of example, with reference to the drawings, in which:

Figure 1 is a block diagram of the system, and

Figure 2 is a flow diagram of its operation.

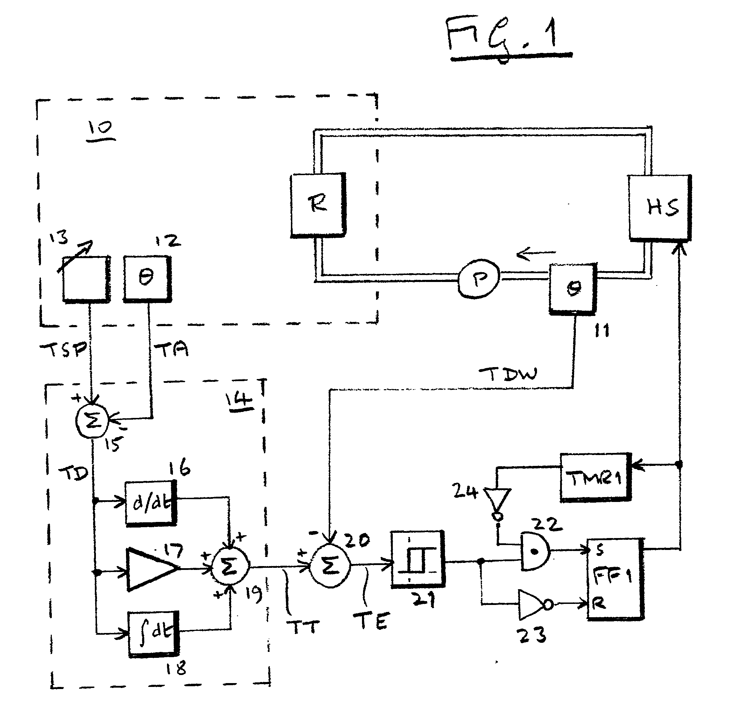

In Figure 1, a heat source HS, water pump P, and radiator R are connected in a water loop. The radiator R is in a room 10, which is the space to be heated. The water loop includes a water temperature sensor 11, which produces a signal TDW indicative of the delivered water temperature. The room 10 contains a room temperature sensor 12, which produces a signal TA indicative of the actual room temperature. There is also a setpoint control 13, which may conveniently be housed in a common housing with the sensor 12, and can be manually set to a desired or setpoint temperature, producing a signal TSP indicative of the setpoint temperature.

The setpoint temperature TSP and the actual temperature TA are fed to a PID unit 14, which processes them to generate a target temperature signal TT in accordance with the equation above. This unit may comprise a difference circuit 15 which feeds an adder circuit 19 via three parallel paths, namely a differentiating circuit 16, a proportional circuit 17, and an integrating circuit 18 as shown. The difference circuit 15 subtracts TA from TSP to produce the difference temperature signal TD. The three terms of the full PID (proportional, integral, and differential) equation are generated by the three circuits 17, 18, and 16, these three circuits incorporating also the three respective constant (k) terms into their outputs. The three outputs are added by the adder circuit 19 to produce the target temperature signal TT.

The target temperature TT and the delivered water temperature signal TDW are fed to a difference circuit 20, which generates an error temperature signal TE. This is fed to a trigger circuit with hysteresis 21, which generates a 1 if TE goes above a (positive) value Tk and a 0 if TE falls below 0. Tk represents approximately the switching differential of the system.

The output of the trigger circuit 21 is fed to a flip-flop FF1, which controls the heating source HS. More specifically, the output from circuit 21 is fed via an AND gate 22 to the set input of the flip-flop, and via an inverter 23 to its reset input. The set or direct output of the flip-flop is fed to the heat source HS, so that the heat source is turned on when the flip-flop is set.

In addition, the set output of flip-flop FF1 is fed to a timer TMR1, the output of which feeds the AND gate 22 via an inverter 24.

The operation of the system may best be understood by supposing that the heat source HS is off (FF1 reset) and the delivered water temperature TDW has fallen more than Tk below the target temperature TT, so that the error temperature TE rises to exceed Tk. Since this takes TE beyond the differential of the trigger circuit 21, the output of this circuit goes to 1. We assume that the timer TMR1 has reached its full period and is no longer running, so that its output is at 0. This output is inverted by the inverter 24, and thus enables gate 22. The 1 signal from circuit 21 therefore passes through gate 22 to flip-flop FF1, setting it. The output from the flip-flop therefore goes to 1, and turns on the heat source HS.

The 1 appearing from flip-flop FF1 is also fed to the timer TMR1, triggering it to start its timing. Its output therefore goes to 1, and remains at 1 until its completes timing its period. (The timer is responsive only to the change of its input signal from 0 to 1, and is unaffected by whether its input remains at 1 or returns to 0.) The gate 22 is therefore disabled (by the complement of the timer output) for the timer period.

The delivered water temperature TDW will rise in response to the heat source HS being turned on and in due course will exceed the target temperature TT. The error temperature TE will then go below 0, and the output of the circuit 21 will change to 0. This 0 will be inverted by inverter 23, and the resulting 1 will be fed to the reset input of flip-flop FF1, resetting it. Its output will change to 0, turning off the heat source HS.

The water temperature will begin to fall again as a result, and will eventually fall to more than Tk below the target temperature TT, so turning the output of circuit 21 back to 1 again. There are three possible timings for this.

(1) FF1 may be reset after the timer TMR1 period has expired; the output from circuit 21 will then obviously go to 1 somewhat after FF1 was reset.

(2) FF1 may be reset before the timer period has expired, but the output from circuit 21 goes to 1 after the timer period has expired.

(3) FF1 may be reset before the timer period has expired, and the output from circuit 21 goes to 1 within the remaining part of the timer period.

In cases (1) and (2), since the timer period has expired, the 1 output from circuit 21 will pass through gate 22, and flip-flop FF1 will be set again immediately the temperature error signal TE goes below 0. However, in case (3), the timer holds gate 22 disabled until its period expires, and the setting of flip-flop FF1 will be delayed until the timer period expires. This means that the cycle period of the system has a lower limit, the timer period, but is free to assume values above this limit.

The details of the system operation will depend on whether or not the timer is operating to limit the cycle period. If the cycle period is being limited, a shift will occur in the value of the target temperature TT, compared to the value which TT would have in the absence of the timer.

The system has been described, with reference to Figure 1, in terms of discrete and largely analog circuitry. It will be realized, however, that substantially all the signal processing may be performed by means of a microcomputer which is programmed to carry out or simulate the above described functions. For this, the temperatures TA and TDW have to be converted into digital form (e.g. by an analog-to-digital converter which has the two analog temperature signals fed to it via a multiplexer). The setpoint temperature TSP can be entered digitally. The microcomputer will have an output which is fed to the heat source HS.

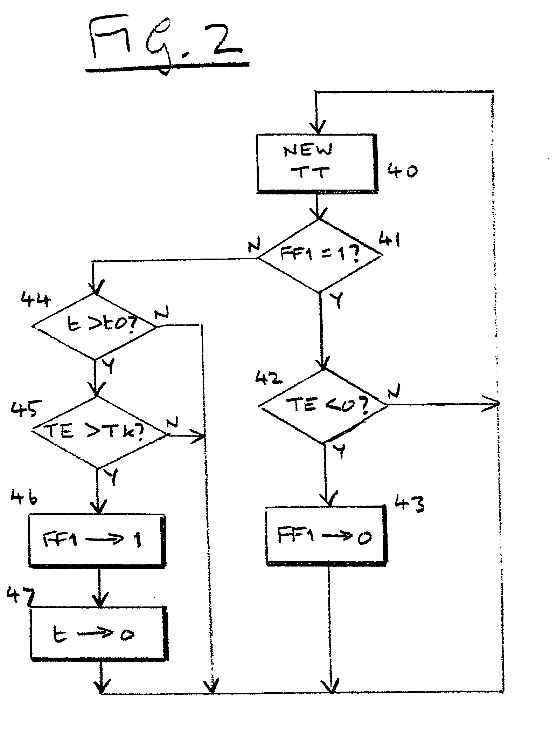

Figure 2 is a flow diagram of the sequence of operations of the system; this diagram is equally applicable to the Figure 1 circuit and a microcomputer embodiment. The sequence is run continuously, starting with block 40. In block 40, the target temperature TT is updated. This is followed by a test 41 of whether the heat source HS is on or off - FF1 is an internal flag bit in the microcomputer representing the flip-flop FF1. If FF1 = 1, the heat source HS is on, and test 42 follows. Test 42 determines whether the error temperature TE is below 0. If it is not, the process returns to block 40; if it is, the process goes on to block 43, in which FF1 is set to 0 and the heat source HS is turned off, with the process then returning to block 40.

If, in test 41, FF1 is 0 (heat source HS off) the process branches to test 44, which determines whether the elapsed time t is greater than a predetermined time t0. The time t is measured by an internal timer of the microcomputer, and the time t0 corresponds to the period of timer TMR1. If the elapsed time is less than t0, then the heat source HS must be held off regardless of the error temperature TE, and the process returns directly to block 40. If the elapsed time is greater than t0, then the process proceeds to block 45, which determines whether the error temperature TE is greater than the differential Tk. If it is not, then there is still no call for heat, and the process returns to block 40. If TE exceeds Tk, however, then the flag bit FF1 is set to 1, in block 46, turning on the heat source HS. This is followed by block 47, in which the timer is reset to 0. The process then returns to block 40.

It will be realized that the updating of the target temperature TT need not be done on every pass of the process. Block 40 can therefore be preceded by a test of a second timer, and block 40 itself bypassed in the second timer has not reached a predetermined value.

The system may be modified by monitoring TDW directly, and turning the heat source HS off (by resetting flip-flop FF1 or setting the flag bit FF1 to 0) if TDW exceeds a preset limit, which operates as a safety limit.

The system may also be modified by incorporating also a "minimum off" time in addition to the minimum on time. In the system shown in Figure 1, this may be done by adding a second timer, fed from the complementary or reset output of flip-flop FF1, and feeding a second AND gate, via an inverter, connected between the inverter 23 and flip-flop FF1. In the flow diagram of Figure 2, this is represented by adding a test block, like block 44, between blocks 41 and 42.

CLAIMS

1.    A temperature control system comprising means (FF1) for generating a control signal for turning on a heat source (HS) periodically in dependence on an actual temperature (TA), characterized by  timer means (TMR1, 22-24) triggered by the initiation of the control signal (FF1 output) to inhibit the generation of a further control signal within a predetermined period.

2.    A temperature control system according to claim 1 characterized by means (12) for sensing the actual temperature (TA), and processing means (14, 20) for generating an error signal (TE) dependent on the difference between the actual and desired temperatures and feeding the error signal to the control signal generating means (FF1).

3.    A temperature control system according to claim 2 characterized in that the processing means include a proportional channel (127) and at least one of a differentiating channel (16) and an integrating channel (18) in parallel with the proportional channel, all channels being fed with the difference between the desired and actual temperatures.

4.  A temperature control system according to either of claims 2 and 3 wherein the heat source (HS) produces a hot fluid which is passed to a radiator (R), characterized by means (11) for sensing the fluid temperature (TDW), and in that the processing means is responsive (at 20) to the fluid temperature.

0161891

1|2

FIG.1

0161891

2/2

FIG. 2